# NEUE EUROPÄISCHE PATENTSCHRIFT

(11) **EP 1 586 229 B2**
(45) Veröffentlichungstag und Bekanntmachung des Hinweises auf die Entscheidung über den Einspruch: **11.10.2017**
(45) Hinweis auf die Patenterteilung: 13.02.2008
(21) Anmeldenummer: 05008257.7
(22) Anmeldetag: 15.04.2005
(51) Int. Cl.: A01B 15/08, A01B 15/02

(54) **Boden führende Werkzeuge für Bodenbearbeitungsgeräte**
Soil-guiding tools for soil working implement
Outils pour guider le sol pour appareil de travail du sol

(30) Priorität: 17.04.2004 DE 102004018757
(43) Veröffentlichungstag der Anmeldung: 19.10.2005
(73) Patentinhaber: Lemken GmbH & Co. KG, 46519 Alpen (DE)
(72) Erfinder: Gelen, Lars, 47495 Rheinberg (DE); De Vries, Ruud, 6543 PP Nijmegen (NL); Jochums, Dieter, 47199 Duisburg (DE); Hönnekes, Ernst, 47652 Weeze (DE); Meurs, Wilhelm, 46519 Alpen (DE)
(74) Vertreter: Schulte, Jens Michael

(56) Entgegenhaltungen:
- WO-A-01/50834
- DE-A1- 10 018 279
- GB-A- 2 154 413

## Beschreibung

Die Erfindung betrifft Werkzeuge für Bodenbearbeitungsgeräte, über die der zu bearbeitende Erdboden geführt wird, nämlich Streichbleche und Streichblechstreifen für Pflüge, deren aus gehärtetem, durch Rissbildung gefährdetem Material bestehenden Grundwerkzeug über Formelemente und einer diesen zugeordneten Befestigungseinheit mit einem Körperrumpf, Scharfuß oder Zinken eines Bodenbearbeitungsgerätes verbindbar ist.

Derartige Werkzeuge bzw. den Boden führende Werkzeuge sind z.B. den Prospekten LEMKEN Anbau-Drehpflüge EurOpal und Vari-Opal (FS. B.o.s.s. 02/03 175 0051/D) und LEMKEN Scheibengrubber Smaragd (FS. B.o.s.s. 02/03 175 0036/D) und auch der WO 01/50834 A1 zu entnehmen. Die entsprechend den Erdboden führenden Werkzeuge werden dort Streichblech, Streichblechkante, Streifenkörper, Leitblech und Randleitblech genannt. Der Begriff Streifenkörper steht hier für einen Pflugkörpertyp, der aus einzelnen Streichblechstreifen besteht. Diese den Boden führenden Werkzeuge leiten das von Scharen abgeschnittene Erdreich z. B. nach oben und/oder zur Seite um und werden über Verbindungselemente, eine Formschlussverbindung oder Schnellbefestigungseinrichtungen mit den tragenden Teilen wie z. B. Körperrumpf, Zinken oder Scharfuß verbunden. Für die jeweilige Verbindung mit dem tragenden Teil sind in den Werkzeugen entsprechende Bohrungen, Ausnehmungen oder andere Formmerkmale bzw. Formelemente vorgesehen. Diese Ausnehmungen oder Bohrungen bzw. Formelemente schwächen diese Werkzeuge, insbesondere dann, wenn die Werkzeuge gehärtet sind. Im gehärteten Zustand fördern z. B. solche Bohrungen und Ausnehmungen eine Rissbildung, die dann zum Bruch des Werkzeuges führen kann. Die entsprechenden den Erdboden führenden Werkzeuge können daher nur bis zu einem gewissen Härtegrad gehärtet werden, was letztendlich zu einer verkürzten Standzeit führt. Bei Überschreitung dieses Härtegrades entstehen bei Belastung Risse, die wie schon erwähnt zum frühen Bruch des Werkzeuges führen können. Aus der GB-A-2154413 ist ein Werkzeug mit Rillenbildung bekannt. Aufgrund des dazu erforderlichen Bodendruckes ist die Härte dieses Schneidteiles nur begrenzt. Darüber hinaus ist zur Verbindung eine Klebeverbindung in einer Bohrung vorgesehen, die bei höherer Härte der Werkzeugoberfläche zu der beschriebenen Rissbildung zwangsweise führen würde. Weiter ist es bekannt, solche Werkzeuge mit einem harten Material zu beschichten, wie z.B. Hartmetall oder Keramik. Die Werkzeuge weisen dann einen niedrigen Härtegrad auf mit einer geringeren Riss- und Bruchgefahr, die Beschichtung mit dem harten Material sorgt dann für hohe Standzeiten. Eine solche Beschichtung ist aber sehr teuer und auch sehr aufwendig.

Der Erfindung liegt daher die Aufgabe zu Grunde, Werkzeuge bzw. den Boden führende Werkzeuge für Bodenbearbeitungsgeräte zu schaffen, bei denen eine Riss- und Bruchgefahr aufgrund der Verbindung mit dem tragenden Teil vermieden ist.

Die Aufgabe wird erfindungsgemäß dadurch gelöst, dass die Befestigungseinheit unter Verzicht auf Bohrungen und Ausnehmungen im Grundwerkzeug ihrerseits mit diesem durch Kleben bzw. über einen Klebeschicht verbunden ist, wozu das Grundwerkzeug eine homogene Einheit ist, dessen Rückseite formelementefrei ausgebildet ist und nur Flächen für die Klebeverbindung mit der Befestigungseinheit aufweist. Durch eine solche Klebeverbindung kann auf das bisherige Einbringen oder Anbringen von Ausnehmungen und Bohrungen vollständig am Werkzeug verzichtet werden. Diese Klebeverbindung selbst gefährdet das gehärtete Material überhaupt nicht und führt daher auch nicht zu einer Materialschwächung oder Rissbildung. Der Klebevorgang selbst kann automatisiert durchgeführt werden, was letztendlich zu einem kostengünstigen Werkzeug als Verschleißteil führt. Da die Befestigungspunkte Bestandteil der angeklebten Befestigungselemente sind, kann das eigentliche Werkzeug bzw. das Grundwerkzeug komplett als Verschleißteil genutzt werden.

Weiter sieht die Erfindung vor, dass mindestens eine Befestigungseinheit je Grundwerkzeug vorgesehen ist. Diese Ausführungsform hat den Vorteil, dass nur dort eine Befestigungseinheit an das Werkzeug angeklebt wird, wo die Belastung hoch ist und wo bei der üblichen Befestigungsmethode mit einer Rissbildung oder mit Brüchen zu rechnen ist.

Die Erfindung sieht weiter vor, dass die Befestigungseinheit ein oder mehrere Formelemente aufweist, über die sie mittels Verbindungselement, Formschlussverbindung oder Schnellbefestigungseinrichtung mit dem Körperrumpf, Scharfuß oder Zinken oder anderen tragenden Teilen verbunden ist. Diese Befestigungseinheiten, die an die den Boden führenden Werkzeuge angeklebt werden, können vielseitig ausgebildet sein, so dass das Montieren und Demontieren dadurch wesentlich erleichtert ist. Dadurch dass die gehärteten Werkzeuge von diesen Formmerkmalen unbeeinflusst sind, erhöht sich die Riss- oder Bruchgefahr eindeutig nicht.

Um auf die bisher üblichen Verbindungselemente zurückgreifen zu können, sieht die Erfindung vor, dass das Formelement als Gewindebohrung oder als Senkloch mit Verdrehsicherung ausgebildet und der Befestigungseinheit zugeordnet ist, die damit für die Aufnahme von entsprechenden Verbindungselementen geeignet ausgeführt ist. Die Verbindungselemente stehen nun mit der Befestigungseinheit in Verbindung und nicht mehr mit dem eigentlichen Werkzeug. Dabei können auch Gewindebohrungen eingesetzt werden, die so eine einfache und schnelle Befestigung des Werkzeugs am tragenden Teil sicherstellen.

Die Erfindung sieht weiter vor, dass die Befestigungseinheit im Bereich von Formelementen eine größere Dicke als im Randbereich aufweist, wobei die Übergänge vorzugsweise fließend sind. Durch diese Ausführungsform kann die Befestigungseinheit so ausgebildet sein, dass sie Verformungen des eigentlichen Werkzeuges während der Arbeit nachfolgen kann, ohne dabei die Klebeverbindung punktuell zu überlasten.

Die Erfindung zeichnet sich insbesondere dadurch aus, dass mit Hilfe der geschilderten Ausbildung die den Boden führenden Werkzeuge mit hoher Härte hergestellt werden können, die extrem hart und dennoch nicht bruch- und rissgefährdet sind, da alle Verbindungselemente, die eine Riss- und Bruchbildung fördern könnten, nicht maschinell oder schweißtechnisch mit dem Werkzeug verbunden sind, sondern über eine das Material schonende Klebeverbindung. Da der Klebevorgang selbst weitgehend oder gar ganz automatisiert durchgeführt werden kann, ist der Herstellungsprozess erleichtert und kostenmäßig günstig. Darüber hinaus können unterschiedlichste Formelemente zur Verbindung eingesetzt werden, je nach dem wo dieses Werkzeug zum Einsatz kommen soll.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: einen Pflugkörper mit Streichblechstreifen als Werkzeug,
- Figur 2: einen Streichblechstreifen mit aufgeklebten Befestigungseinheiten,
- Figur 3: eine Befestigungseinheit mit Gewindebohrung als Befestigungspunkt und
- Figur 4: eine Befestigungseinheit mit verdrehgesicherter Senkschraube als Befestigungspunkt.

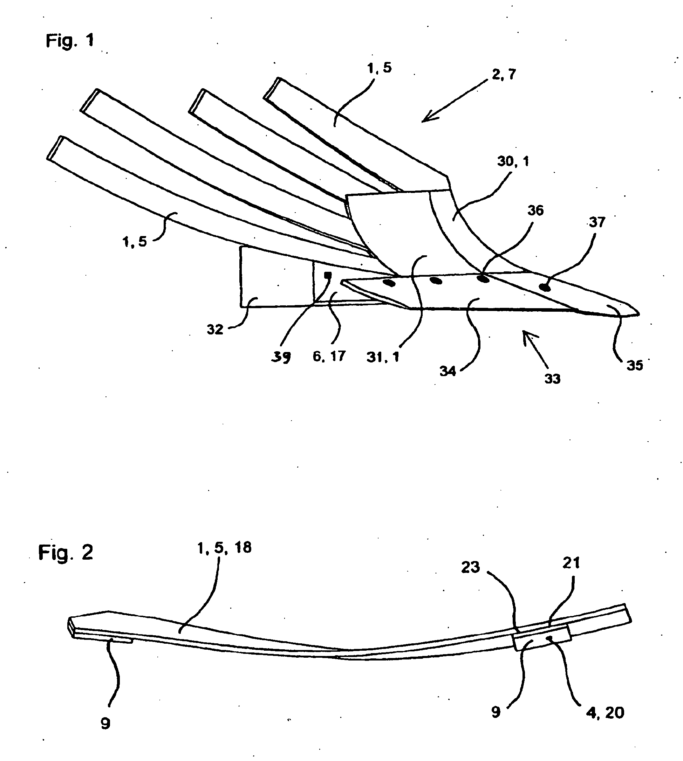

Figur 1 zeigt einen Pflugkörper (7) mit Streichblech (2). Das Streichblech (2) weist hier vier Streichblechstreifen (5) als den Boden führende Werkzeuge auf, wobei das Grundwerkzeug dieser Werkzeuge mit (1) bezeichnet ist. Vorne weist das Streichblech (2) eine Streichblechkante (30) und ein Streichblechmittelteil (31) auf, die ebenfalls als den Erdboden führende Werkzeuge dienen. Vor dem Streichblech (2) ist das Schar (33) mit Scharspitze (35) und Scharblatt (34) angeordnet. Die Scharspitze (35) wird über die Befestigungsschrauben (37) und das Scharblatt (34) über die Befestigungsschrauben (36) mit dem Körperrumpf (6) verbunden, der hier als tragendes Teil (17) dient. Hinten weist der Körperrumpf (6) die Anlage (32) auf, die mittels Befestigungsschraube (39) befestigt ist.

Die als Befestigungspunkte dienenden Formelemente (4) der den Erdboden führenden Werkzeuge (1), (2), (5), (30) und (31) sind nicht sichtbar, da sie auf der Rückseite der Werkzeuge wie Streichblech (2), Streichblechstreifen (5), Streichblechkante (30) und Streichblechmittelteil (31) angeklebt sind.

Über das Schar (33) mit Scharspitze (35) und Scharblatt (34) wird das Erdreich abgeschnitten und über die den Erdboden führenden Werkzeuge gewendet. Diese Werkzeuge bilden keine Stoßkante für das Erdreich, so dass sie bereits durch eine Klebeverbindung sicher befestigt werden können. Dies ist beim Schar (33) bzw. der Scharspitze (35) und dem Scharblatt (34) nicht ohne weiteres möglich, aber durchaus lösbar.

Die Figur 2 zeigt ein Grundwerkzeug (1) eines den Erdboden führenden Werkzeuges, und zwar einen Streichblechstreifen (5). Auf der Rückseite weist der Streichblechstreifen (5) angeklebte Befestigungseinheiten (9) auf, die ihrerseits die als Befestigungspunkte dienenden Formelemente (4) aufweisen. In diesem Fall sind die Formelemente (4) jeweils als Gewindebohrung (20) ausgebildet. Der Streichblechstreifen (5) ist hier als homogene Einheit (18) geformt und ausgebildet und weist keinerlei Bohrung und kein anderes Formmerkmal bzw. Formelement (4) auf, die eine Rissbildung fördern könnten. Für die Aufnahme der Befestigungseinheiten (9) weist der Streichblechstreifen (5) Flächen (21) auf, auf die die Befestigungseinheiten (9) mit der Fläche (23) aufgeklebt sind.

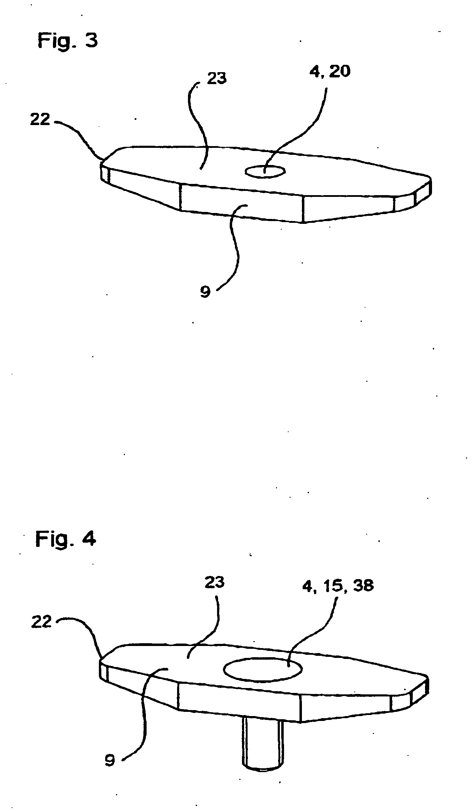

Die Figur 3 zeigt eine Befestigungseinheit (9) mit Formelement (4). Als Befestigungspunkt bzw. Formelement (4) ist hier eine Gewindebohrung (20) vorgesehen. Die Befestigungseinheit (9) ist im Bereich des Formelementes (4) dick ausgebildet und wird zum Randbereich (22) hin dünner. Bei solchen den Erdboden führenden Werkzeugen, die während der Arbeit durchfedern, kann die Dicke der Befestigungseinheit (9) im Randbereich (22) sehr dünn ausgebildet sein, im Extremfall bis auf Folienstärke. Auch bei stärkerem Durchfedern der den Boden führenden Werkzeuge wird dann der Klebebereich nicht übermäßig belastet.

Figur 4 zeigt eine Befestigungseinheit (9) mit Formelement (4). Hier wird vor dem Aufkleben der Befestigungseinheit (9) auf ein Werkzeug bzw. dessen Grundwerkzeug (1) eine verdrehgesicherte Senkschraube (38) montiert, über die das entsprechende Werkzeug bzw. das Grundwerkzeug (1) nach dem Ankleben der Befestigungseinheit (9) an das entsprechende tragende Teil (17) wie z. B. Körperrumpf (6) oder Scharfuß befestigt werden kann. Die verdrehgesicherte Senkschraube (38) dient hier als Verbindungselement (15). Das Verbindungselement (15) ist wie zuvor schon erwähnt hier eine Senkkopfschraube mit Vierkantansatz, also eine verdrehgesicherte Senkschraube (38).

## Patentansprüche

1. Werkzeuge für Bodenbearbeitungsgeräte, über die der zu bearbeitende Erdboden geführt wird, nämlich Streichbleche (2) und Streichblechstreifen (5) für Pflüge, deren aus gehärtetem, durch Rissbildung gefährdetem Material bestehenden Grundwerkzeug (1) über Formelemente (4) und einer diesen zugeordneten Befestigungseinheit (9) mit einem Körperrumpf (6), Scharfuß oder Zinken eines Bodenbearbeitungsgerätes verbindbar ist,
**dadurch gekennzeichnet,**
**dass** die Befestigungseinheit (9) unter Verzicht auf Bohrungen oder Ausnehmungen im Grundwerkzeug (1) ihrerseits mit diesem durch Kleben bzw. über eine Klebeschicht verbunden ist, wozu das Grundwerkzeug (1) eine homogene Einheit (18) ist, dessen Rückseite formelementefrei ausgebildet ist und nur Flächen (21) für die Klebeverbindung mit der Befestigungseinheit (9) aufweist.

2. Werkzeug nach Anspruch 1,
**dadurch gekennzeichnet,**
**dass** mindestens eine Befestigungseinheit (9) je Grundwerkzeug (1) vorgesehen ist.

3. Werkzeug nach Anspruch 1,
**dadurch gekennzeichnet**
**dass** die Befestigungseinheit (9) ein oder mehrere Formelemente (4) aufweist, über die sie mittels Verbindungselement (15), Formschlussverbindung oder Schnellbefestigungseinrichtung mit dem Körperrumpf (6), Scharfuß oder Zinken oder anderen tragenden Teilen (17) verbunden ist.

4. Werkzeug nach einem der vorhergehenden Ansprüche,
**dadurch gekennzeichnet**
**dass** das Formelement (4) als Gewindebohrung (20) oder als Senkloch mit Verdrehsicherung ausgebildet und der Befestigungseinheit (9) zugeordnet ist, die damit für die Aufnahme von entsprechenden Verbindungselementen (15) geeignet ausgeführt ist.

5. Werkzeug nach einem der vorhergehenden Ansprüche,
**dadurch gekennzeichnet**
**dass** die Befestigungseinheit (9) im Bereich von Formelementen (4) eine größere Dicke als im Randbereich (22) aufweist, wobei die Übergänge vorzugsweise fließend sind.

## Claims

1. Tools for soil-working implements, via which the soil which is to be cultivated is guided, namely mould boards (2) and mould board strips (5) for ploughs, the basic tool (1) of which, consisting of hardened material at risk of cracking, can be connected via shaped elements (4) and a fastening unit (9) associated with these to a frog (6), share base or tines of a soil-working implement,
**characterized in that**
the fastening unit (9) is connected without bores or recesses in the basic tool (1) to the latter through adhesion or via an adhesive layer, for which purpose the basic tool (1) is a homogeneous unit (18), the back of which is formed so as to be free from shaped elements and only comprises surfaces (21) for the adhesive joint with the fastening unit (9).

2. The tool according to Claim 1,
**characterized in that**
at least one fastening unit (9) is provided for each basic tool (1).

3. The tool according to Claim 1,
**characterized in that**
the fastening unit (9) has one or a plurality of shaped element(s) (4), via which it is connected by means of a connecting element (15), a positive connection or a quick-action fastening device to the frog (6), share base or tines or other bearing parts (17).

4. The tool according to any one of the preceding Claims,
**characterized in that**
the shaped element (4) is formed as a threaded bore (20) or as a countersunk hole with an anti-twist mechanism and is associated with the fastening unit (9), which is therefore constructed so as to be suitable for receiving corresponding connecting elements (15).

5. The tool according to any one of the preceding Claims,
**characterised in that**
the fastening unit (9) is thicker in the region of shaped elements (4) than in the edge region (22), wherein the transitions are preferably smooth.

## Revendications

1. Outils pour appareils de travail du sol au-dessus desquels le sol à travailler est guidé, à savoir des versoirs (2) et bandes de versoirs (5) pour charrues dont l'outil de base (1) trempé se composant d'un matériau exposé au risque de formation de fissures est relié par l'intermédiaire d'éléments de moulage (4) et d'une unité de fixation (9) affectée à ces derniers à un sep de corps (6), pied de soc ou des dents d'un appareil de travail du sol,
**caractérisés en ce que**
l'unité de fixation (9) est pour sa part, en renonçant à des alésages ou à des évidements dans l'outil de base (1), reliée à ce dernier par collage ou par l'intermédiaire d'une couche adhésive, ce pour quoi l'outil de base (1) est une unité homogène (18) dont l'arrière est formé sans éléments de moulage et présente uniquement des surfaces (21) pour la liaison adhésive avec l'unité de fixation (9).

2. Outil selon la revendication 1,
**caractérisé en ce que**
au moins une unité de fixation (9) est prévue pour chaque outil de base (1).

3. Outil selon la revendication 1,
**caractérisé en ce que**
l'unité de fixation (9) présente un ou plusieurs éléments de moulage (4) par l'intermédiaire desquels elle est reliée au moyen de l'élément de liaison (15), par assemblage par forme ou au moyen d'un système de fixation rapide avec le sep de corps (6), le pied de soc ou les dents ou avec d'autres pièces portantes (17).

4. Outil selon l'une quelconque des revendications précédentes,
**caractérisé en ce que**
l'élément de moulage (4) est formé comme alésage fileté (20) ou comme noyure à protection contre la torsion et est affecté à l'unité de fixation (9) qui est ainsi approprié pour le logement d'éléments de liaison (15) correspondants.

5. Outil selon l'une quelconque des revendications précédentes,
**caractérisé en ce que**
l'unité de fixation (9) présente au niveau d'éléments de moulage (4) une épaisseur supérieure à celle du bord (22), étant donné que les transitions sont de préférence continues.
